(19) Europäisches Patentamt
European Patent Office
Office européen des brevets

(11) Veröffentlichungsnummer: **0 135 909**
**B1**

(12) # EUROPÄISCHE PATENTSCHRIFT

(45) Veröffentlichungstag der Patentschrift: **12.08.87**

(51) Int. Cl.⁴: **C 09 D 5/44,** C 08 G 18/83, C 08 G 18/08

(21) Anmeldenummer: **84111151.1**

(22) Anmeldetag: **19.09.84**

(54) **Kathodisch abscheidbares wässriges Elektrotauchlack-Überzugsmittel.**

(30) Priorität: **20.09.83 DE 3333834**

(43) Veröffentlichungstag der Anmeldung: **03.04.85 Patentblatt 85/14**

(45) Bekanntmachung des Hinweises auf die Patenterteilung: **12.08.87 Patentblatt 87/33**

(84) Benannte Vertragsstaaten: **AT BE CH DE FR GB IT LI NL SE**

(56) Entgegenhaltungen:
**EP-A-0 012 463**
**EP-A-0 082 291**
**FR-A-2 426 718**
**US-A-3 804 786**

(73) Patentinhaber: **Herberts Gesellschaft mit beschränkter Haftung, Christbusch 25, D-5600 Wuppertal 2 (DE)**

(72) Erfinder: **Patzschke, Hans- Peter, Dr., Am Heckendorn 71, D-5600 Wuppertal 2 (DE)**
Erfinder: **Göbel, Armin, Osteroder- Strasse 27, D-5600 Wuppertal 2 (DE)**
Erfinder: **Böhmert, Reiner, Feldstrasse 46, D-5657 Haan/Rhld (DE)**

(74) Vertreter: **Türk, Gille, Hrabal, Bruckner Strasse 20, D-4000 Düsseldorf 13 (DE)**

**EP 0 135 909 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein kathodisch abscheidbares wäßriges, Epoxidharz-freies Elektrotauschlack-Überzugsmittel, das ein Kunstharz-Bindemittel mit tertiären Aminogruppen und Hydroxylgruppen enthält, welches durch Protonieren mit Säuren wasserlöslich gemacht werden kann, und das Kunstharz-Vernetzungsmittel sowie gegebenenfalls Pigmente, Füllstoffe, Korrosionsinhibitoren, Lackhilfsmittel, Katalysatoren und in einer Menge von bis zu 20 Gew.%, bezogen auf das Gesamtgewicht des Überzugsmittels, organische Lösemittel enthält.

Es ist bekannt, daß verschiedene organische Bindemittelsysteme in einem wäßrigen Medium durch Salzbildung dispergiert und auf elektrophoretischem Wege auf einen leitenden, metallenen Gegenstand, der in das wäßrige Bad eingetaucht wird, abgeschieden werden können. Als Elektrophoreselacke mit hohem Umgriff und sehr gutem Korrosionsschutz auf ungebonderten Blechen werden dabei in der Praxis vorwiegend kathaphoretisch abscheidbare Bindemittel verwendet, die durch Umsetzung von Epoxidharzen auf Basis von Bisphenol A mit Aminen oder Aminoalkoholen hergestellt werden. Die thermische Vernetzung dieser Lacke erfolgt nach unterschiedlichen Verfahren, z.B. durch Einbau von blockierten Isocyanaten (DE-A-20 57 799, DE-A-21 31 060, DE-A-22 52 536, DE-A-22 65 195, DE-A- 26 34 211) oder durch Umamidierungs- oder Umesterungsverfahren (EP-A-0 004 090, EP-A-012 463, EP-A-040 867, EP-A-066 859, EP-A-082 291, DE-A-31 03 642, DE-A-32 15 891, DE-A-32 24 864, DE-A-32 25 874, DE-A-33 15 469, DE-A-33 22 766).

Ein Nachteil der beschriebenen Basisharze ist die mangelnde Bewitterungsbeständigkeit und ihre Kreidungsneigung. Ihre Vergilbungsneigung erschwert die Herstellung von nichtvergilbenden Weißlacken. Basisharze, die für das Umesterungsverfahren eingesetzt werden, zeigen außerdem Haftungsschwierigkeiten beim Auftragen weiterer Schichten, z.B. PVC.

Aus der DE-A-30 07 004 sind Lack-Kunstharze für die Elektrotauchlackierung bekannt, die erhältlich sind durch Umsetzung eines Polyisocyanats mit Polyhydroxylverbindungen unter Bildung von Urethanpräpolymeren mit endständigen Isocyanatgruppen, und anschließende Umsetzung des Urethanpräpolymeren mit einer Hydroxylverbindung mit tertiärer Aminogruppe und einer Hydroxylverbindung mit quaternärer Ammoniumgruppe unter Bildung eines Polyurethans mit tertiärer Aminogruppe, quaternären Ammoniumgruppen, Hydroxylgruppen und blockierten Isocyanatgruppen. Die quaternären Ammoniumgruppen bleiben beim Einbrennen als Störstellen im Film.

Aus der DE-A-29 20 985 sind Harze bekannt, die erhältlich sind durch Umsetzung von einem Polyisocyanat mit einem Polyol und einem monofunktionellen Blockierungsmittel, wobei eine überschüssige molare Menge der Isocyanatgruppen, bezogen auf die Gesamtmenge der Hydroxylgruppen des Polyols und der funktionellen Gruppen des monofunktionellen Blockierungsmittels, eingesetzt wird, und wobei eine Zwischenstufe mit Isocyanatgruppen erhalten wird, die man mit einem tertiären Amin mit mindestens zwei Hydroxylgruppen umsetzt, und zwar bei einem molaren Überschuß der Hydroxylgruppen des tertiären Amins, bezogen auf die Isocyanatgruppen der Zwischenstufe. Diese Produkte enthalten blockierte Isocyanatgruppen, die insofern stören, als bei dem späteren Einbrennvorgang die Blockierungsgruppen abgespalten werden. Die Harze haben den Nachteil, daß die Einbrennverluste durch die eingesetzten Blöckierungsmittel recht hoch sind. Leichtflüchtige, niedermolekulare Alkohole, wie Methanol oder Ethanol, können nicht als Verkappungsmittel eingesetzt werden, weil deren Urethane unterhalb etwa 250°C stabil sind.

Aus der DE-A-31 03 642 ist die Kombination von einem aminogruppenhaltigen Basisharz mit primären und/oder sekundären Aminogruppen und einem umamidierungsfähigen Vernetzungsmittel mit β-Hydroxyalkylgruppen bekannt. Gemäß Seite 22, Zeile 14 bis 29 kann dieses Basisharz auch aus Polyisocyanaten aufgebaut werden, wobei jedoch ein Beispiel hierfür nicht vorhanden ist. Die Herstellung solcher Basisharze ist problematisch, weil die Isocyanatgruppen sich nicht nur mit den primären bzw. sekundären Aminogruppen umsetzen, sondern auch verschiedene Nebenreaktionen mit den als Schutzgruppen erforderlichen Ketimingruppen möglich sind (vgl. K.Harada, Y.Mizoe, J.Furukawa, S.Yamashita: Makrom. Chem., 132 (1970), 295-304).

Der Erfindung liegt die Aufgabe zugrunde, ein kathodisch abscheidbares wäßriges Elektrotauchlack-Überzugsmittel zu finden, das bezüglich der beschriebenen Nachteile eine Verbesserung bringt.

Gegenstand der Erfindung ist demgemäß ein kathodisch abscheidbares wäßriges Epoxidharz-freies Elektrotauchlack-Überzugsmittel, das ein Kunstharz-Bindemittel mit tertiären Aminogruppen und Hydroxylgruppen enthält, welches durch Protonieren mit Säuren wasserlöslich gemacht werden kann, und das Kunstharz-Vernetzungsmittel sowie gegebenenfalls Pigmente, Füllstoffe, Korrosionsinhibitoren, Lackhilfsmittel, Katalysatoren und in einer Menge von bis zu 20 Gew.%, bezogen auf das Gesamtgewicht des Überzugsmittels, organische Lösemittel enthält, das dadurch gekennzeichnet ist, daß es enthält:

A) 50 bis 99 Gew.%, bezogen auf die Gesamtmenge von A) und B), eines Harnstoff- und Urethangruppen in der Kette des Moleküls enthaltenden Kunstharz-Bindemittels mit tertiären Aminogruppen und Hydroxylgruppen, das

(a) eine Aminzahl von 35 bis 120 aufweist,

(b) eine Hydroxylzahl von 50 bis 400 aufweist,

(c) im wesentlichen keine primären, sekundären und quaternären Aminogruppen enthält,

(d) im wesentlichen keine freien Isocyanatgruppen enthält, und

(e) im wesentlichen keine blockierten Isocyanatgruppen enthält, die bei Einbrenntemperaturen bis zu 200°C mit in Reaktionskomponenten vorhandenen Hydroxylgruppen reagieren,

B) 1 bis 50 Gew.%, bezogen auf die Gesamtmenge von A) und B), im wesentlichen nicht-saure Kunstharze mit mindestens zwei endständigen veresterten Carboxylgruppen, die unter üblichen Lackeinbrennbedingungen mit der Komponente A) unter Vernetzung reagieren, und

C) Umesterungskatalysatoren für die thermische Umesterung von A) mit B) bei Temperaturen über 140°C

Wesentlich für den Aufbau des Kunstharz-Bindemittels A) sind die über die Isocyanatgruppen eingeführten Harnstoff- und Urethangruppen in der Kette des Moleküls, die die Haftungseigenschaften des Films verbessern. Die tertiären Aminogruppen vermitteln die Wasserlöslichkeit nach Neutralisation mit Säuren und die freien Hydroxylgruppen vernetzen mit dem Vernetzungsmittel (Komponente B) durch Umesterung.

Die Herstellung des Kunstharz-Bindemittels A) erfolgt in an sich bekannter Weise dadurch, daß man gegebenenfalls verkappte Polyisocyanate mit solchen mindestens ein tertiäres Stickstoffatom enthaltenden Verbindungen umsetzt, die eine oder mehrere der folgenden Gruppen enthalten:

a) mindestens 2 Hydroxylgruppen

b) mindestens 2 sekundäre Aminogruppen

c) mindestens eine primäre Aminogruppe

d) mindestens je eine Hydroxyl- und sekundäre Aminogruppe,

und gegebenenfalls mit weiteren Polyhydroxylverbindungen, bis alle noch vorhandenen, gegebenenfalls blockierten, Isocyanatgruppen mit Hydroxylgruppen umgesetzt sind. Die Menge der Ausgangsprodukte wird dabei so gewählt, daß das erhaltene Reaktionsprodukt die oben angegebene Aminzahl und Hydroxylzahl aufweist.

Im Endprodukt beträgt das Äquivalenzverhältnis zwischen den umgesetzten Isocyanatgruppen und den insgesamt eingesetzten, d.h. umgesetzten und freien Hydroxylgruppen, zweckmäßig 1:1 bis 1:4, vorzugsweise 1:1,2 bis 1:2.

Die Menge der Ausgangsprodukte wird so gewählt, daß im erhaltenen Endprodukt, Komponente A), die oben unter (c), (d) und (e) genannten Gruppen nicht (mehr) vorliegen. Unter dem Begriff "im wesentlichen" wird verstanden, daß praktisch alle derartigen Gruppen nicht (mehr) vorliegen, wobei jedoch bei hochmolekularen Produkten der hier vorliegenden Art es immer möglich ist, daß ein sehr geringer Gehalt an solchen Gruppen vorliegen kann. Freie Isocyanatgruppen sind in der Regel völlig umgesetzt, da diese außerordentlich leicht mit den überschüssigen Hydroxylgruppen reagieren. Eine sehr geringe Menge an primären, sekundären und quaternären Aminogruppen von z.B. bis zu 5 %, bezogen auf die vorhandenen tertiären Aminogruppen, vorzugsweise bis zu 3 % oder bevorzugt bis zu 1 %, wirkt in der Regel nicht störend und soll unter der Definition "im wesentlichen keine" erfaßt werden.

Das gleiche gilt sinngemäß für die blockierten Isocyanatgruppen, bezogen auf die in der Komponente A) vorliegenden umgesetzten Isocyanatgruppen. Durch die Auswahl der Reaktionsbedingungen kann der Fachmann erreichen, daß praktisch überhaupt keine blockierten Polyisocyanatgruppen mehr in der Komponente A) vorliegen.

Als Polyisocyanate eignen sich aliphatische, cycloaliphatische und/oder aromatische Polyisocyanate mit mindestens zwei Isocyanatgruppen pro Molekül. Typische Beispiele sind die Isomeren oder Isomerengemische des Toluylendiisocyanats, 4,4'-Diphenylmethan-diisocyanats, sowie ihrer Hydrierungsprodukte wie Dicyclohexylmethan-diisocyanat. Außerdem werden verwendet Hexan-1,6-diisocyanat, 1,6-Diisocyanato-2,2,4,-trimethylhexan oder Isophorondiisocyanat. Auch gemischt aliphatisch/aromatische Verbindungen sind geeignet. Für die Reaktion können auch sogenannte verkappte Polyisocyanate verwendet werden, wie beispielsweise das Reaktionsprodukt von Diphenylmethan-4,4'-diisocyanat mit zwei Mol Kresol. Als Blockierungsmittel sind geeignet monofunktionelle Verbindungen, die ein aktives Wasserstoffatom (Zerewitinoff-Reaktion) aufweisen, wie niedere aliphatische oder cycloaliphatische Alkohole, Phenole, Oxime, Lactame, Imide, Malonsäure- oder Acetessigsäureester. Als Triisocyanate haben sich Produkte bewährt, die durch Trimerisierung, Umsetzung mit Wasser oder anteilweise Reaktion mit trifunktionellen Polyolen entstehen, wie das Biuret aus dem Hexamethylendiisocyanat und Wasser, das Isocyanurat des Hexamethylendiisocyanats oder das Addukt von Toluylendiisocyanat an Trimethylolpropan. Beim Einsatz von Polyisocyanaten, die mehr als zwei Isocyanatgruppen im Molekül enthalten, wird vorzugsweise ein größerer Anteil an Diisocyanat mitverwendet, um Gelierungen zu vermeiden. Im Rahmen der Erfindung werden aliphatische oder cycloaliphatische Polyisocyanate bevorzugt, um nichtvergilbende Weißlacke herzustellen.

Bei der Herstellung der Komponente A) können auch Kettenabbrecher eingesetzt werden, um in für den Fachmann bekannter Weise das Molekulargewicht bzw. den Aufbau des Moleküls zu steuern. Hierfür können z.B. eingesetzt werden Diamine die eine tertiäre und eine primäre Aminogruppe im Molekül enthalten. Beispiele hierfür sind Dialkylaminoalkylamin mit linearen oder verzweigten aliphatischen oder cycloaliphatischen Resten mit 1 bis 10 Kohlenstoff-Atomen wie Dimethylaminopropylamin oder Diethylaminoethylamin. Für die Löslichkeit und die Basizität des Harzes ist der Einbau der Dimethylaminogruppe besonders vorteilhaft. Es sollte daher bevorzugt mindestens eine Dimethylaminogruppe pro Aminopolyurethan eingesetzt werden. Andere Beispiele für Kettenabbrecher sind Aminoalkohole, die eine tertiäre Aminogruppe und eine Hydroxylgruppe enthalten, wie Dimethylaminoethanol, oder auch Methoxypropylamin.

Die Herstellung der Komponente A) erfolgt zweckmäßig durch Umsetzung der gegebenenfalls verkappten Polyisocyanate mit mindestens ein tertiäres Stickstoffatom enthaltenden Verbindungen der oben beschriebenen Art und mit Polyhydroxylverbindungen, die keine tertiären Stickstoffatome enthalten. Die Umsetzung dieser Komponenten kann in einer Stufe oder nacheinander in zwei Stufen erfolgen. Wenn sie in

zwei Stufen erfolgt, werden zweckmäßig zunächst die Polyisocyanate mit mindestens ein tertiäres Stickstoffatom enthaltenden Verbindungen umgesetzt zu einem noch (gegebenenfalls verkappte) Isocyanatgruppen enthaltenden Zwischenprodukt, das dann mit einer solchen Menge Polyhydroxylverbindungen umgesetzt wird, daß alle noch vorhandenen, gegebenenfalls blockierten, Isocyanatgruppen mit Hydroxylgruppen umgesetzt werden. Dieses bevorzugte Verfahren hat den Vorteil, daß das Harz keine freien, nicht eingebauten Aminogruppen mehr enthält.

Zur Einführung von Stickstoffgruppen können auch Polyalkohole, die mindestens ein tertiäres Stickstoffatom enthalten, eingesetzt werden. Bevorzugt werden aliphatische Diole, wie N-Alkyl-dialkanolamine, wobei als Alkyl-, bzw. Alkanrest aliphatische oder cycloaliphatische Reste mit 1 bis 10 Kohlenstoffatomen verwendet werden. Die Alkylgruppe kann z.B. die Methyl-, Ethyl-, Butyl- oder Cyclohexylgruppe sein. Der Alkanolrest besteht z.B. aus Ethanol, Isopropanol, Butanol oder Cyclohexanol. Geeignete Beispiele sind N-Methyl-diethanolamin, N-Methyl-diisopropanolamin oder 1,2-Propandiol-3-dimethylamin. Beim Einsatz von tertiären Aminen mit mehr als zwei Hydroxylgruppen wie Triethanolamin oder Triisopropanolamin wird vorzugsweise ein größerer Anteil an N-Alkyl-Dialkanolamin eingesetzt, um Gelierungen zu vermeiden.

Als tertiäre Aminogruppen enthaltende Verbindungen können auch z.B. N-Dimethyl-N"-methyldiethylendiamin, N,N',N"-Trimethyl-diethylentriamin, N,N-Dimethyl-N'-hydroxyethyl-ethylendiamin oder N,N'-Dimethyl-N'-hydroxyethyl-ethylendiamin mit Polyisocyanaten umgesetzt werden.

Durch Reaktion von überschüssigen Isocyanatgruppen mit Harnstoff- oder Urethangruppen können Verzweigungen im Molekül enstehen. Enthalten die Diamine kein tertiäres Stickstoffatom, so dienen sie der reinen Kettenverlängerung. Beispiele für Verbindungen mit mindestens zwei sekundären Aminogruppen sind N,N'-Dialkylendiamine, wie Dimethyl-ethylendiamin, N,N'-Dialkylpolyoxyalkylendiamine, wie N,N'-Dimethyl-polyoxypropylendiamin, cyanalkylierte Alkylendiamine, wie Bis-N,N'-Cyanethylethylendiamin, cyanalkylierte Polyoxyalkylendiamine, wie Bis-N,N'-Cyanethyl-polyoxypropylendiamin. Als Alkyl- oder Alkylengruppen finden lineare, verzweigte oder cyclische organische Reste mit 1 bis 10 Kohlenstoffatomen Verwendung. Sekundäre Diamine, die zusätzlich sekundäre Hydroxylgruppen enthalten, können auch hergestellt werden durch Reaktion von einem Mol primäres Diaminoalkan mit zwei Molen Monoglycidylether oder Monoglycidylester, speziell durch Umsetzung von Diaminohexan-1,6 mit dem Glycidylester von $\alpha$-verzweigten Fettsäuren wie der Versaticsäure.

Die Umsetzung von Polyisocyanaten mit Polyaminen oder Aminoalkoholen erfolgt in Gegenwart von wasserfreien Lösemitteln, die nicht mit Isocyanaten reagieren können, wie Dimethyldiglykolether, Methylisobutylketon oder Ethylacetat, etwa bei Temperaturen von 0 bis 80°C, besonders bei etwa Raumtemperatur. Die Molverhältnisse der Reaktionspartner werden so gewählt, daß pro Molekül des Reaktionsproduktes mindestens zwei Isocyanatgruppen vorhanden sind. Die Umsetzung der Polyamine und Aminoalkohole kann auch mit blockierten Polyisocyanaten bei höheren Reaktionstemperaturen, wie 150 bis 220°C, unter Abspaltung der Blockierungsmittel erfolgen. Dieses Verfahren ermöglicht den Einsatz schwerer löslicher oder höherschmelzbarer Rohstoffe. Das Reaktionsprodukt enhält dann für die Weiterreaktion mindestens zwei blockierte Isocyanatgruppen.

Zur Herstellung der Komponante A) sind zweckmäßig Polyalkohole, die im Durchschnitt mehr als zwei Hydroxylgruppen enthalten. Hierbei werden die Mengenverhältnisse so gewählt, daß pro für diese Umsetzung vorhandene NCO-Gruppe höchstens ein Mol Polyalkohol eingesetzt wird. Es werden damit an den Kettenenden Hydroxylgruppen eingeführt. Bei Verwendung von weniger Polyalkohol, bevorzugt 0.5 bis 1 Mol, wird dabei gleichzeitig die Kettenlänge des aminogruppenhaltigen Vorproduktes verlängert. Setzt man dabei Polyalkohole mit mehr als zwei Hydroxylgruppen ein, so erhält man auch über die Kette verteilt Hydroxylgruppen. Als Polyalkohole finden Verwendung Neopentylglykol, bis ethoxyliertes Neopentylglykol, Hydroxypivalinsäureneo-pentylglykolester, Hexandiol-1,6, 1,4-Bis-(hydroxymethyl)-cyclohexan, 1,1-Isopropyliden-bis-(p-phenoxy)-2-propanol, Trimethylolpropan, Trimethylolethan, Glycerin, Tris-($\beta$-hydroxyethyl)isocyanurat, Triethanolamin, Diethanolamin, Triisopropanolamin, Diisopropanolamin, Triolamide nach US-A-3 766 118 und US-A-3 766 119, Pentaerythrit oder das Reaktionsprodukt von Pentaerythrit mit Dicarbonsäuren, z.B. Dimerfettsäure. Es können jedoch auch hydroxylgruppenhaltige Polyether oder Polyester mit verschiedener Funktionalität und Molekulargewicht eingesetzt werden. Beispiele hierfür sind Polyglykolether, Polyesterpolyole, Polyetherpolyole, Polycaprolactonpolyole oder Polycaprolactampolyole. Es werden Polyole mit primären Hydroxylgruppen bevorzugt. Besonders bevorzugt sind stickstoffgruppen freie Polyole wie Trimethylolpropan und Trimethylolethan.

Die Reaktion verläuft zweckmäßig bei Temperaturen von 25 bis 80°C. Die Polyalkohole können auf einmal zu dem isocyanatgruppenhaltigen Vorprodukt zugegeben werden oder das Vorprodukt wird langsam in eine vorgelegte Lösung des Polyalkohols eingetropft. Um die Isocyanatgruppen vollständig umzusetzen, kann es gegen Ende der Reaktion notwendig sein, die Temperatur kurzfristig weiter anzuheben. Sind die Isocyanatgruppen blockiert, so muß die Entkappungstemperatur von etwa 150 bis 220°C eingehalten werden. Das fertige Endprodukt darf praktisch keine blockierten oder freien Isocyanatgruppen mehr enthalten.

Die stöchiometrische Berechnung und die Auswahl der einzelnen Rohstoffe erfolgt so, daß die Komponente A) im Durchschnitt mindestens eine tertiäre Aminogruppe, bevorzugt niedere ($C_1$ bis $C_4$) Dialkylamino-Gruppe, pro Molekül enthält. Die untere Grenze der Aminzahl (ausgedrückt in mg KOH pro Gramm Festharz) beträgt 35; sie liegt zweckmäßig über 50. Die obere Grenze beträgt 120; sie liegt bevorzugt unter 100, besonders bevorzugt unter 80. Ist die Aminzahl zu niedrig, so ist die Löslichkeit zu gering; der Lack setzt beim Stehen ab. Durch den zu hohen Neutralisationsgrad werden außerdem in den Bädern zu saure pH-Werte erhalten. Ist die Aminzahl zu

hoch, so entsteht ein schlecht haftender Überzug. Durch zu starke elektrolytische Gasentwicklung beobachtet man oft eine unregelmäßig dicke, blasige Oberfläche.

Die im Molekül vorhandene Hydroxylzahl (ausgedrückt in mg KOH pro Gramm Festharz) ist maßgebend für die Vernetzungsfähigkeit des Films. Sie sollte über 50, vorteilhaft über 100 liegen. Die obere Grenze der Hydroxylzahl liegt bei 400, vorteilhafter unter 300. Ist die Hydroxylzahl zu niedrig, so entstehen bei der Umesterung Filme, die noch in organischen Lösemitteln wie Methylethylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Das tertiäre Aminogruppen aufweisende Kunstharz-Bindemittel, auch Basisharz genannt, hat ein mittleres Molekulargewicht ($\bar{M}n$) von etwa 500 bis 20 000, speziell 1000 bis 5000 und einen $pK_b$-Wert von etwa 3 bis 7.0. Der $pK_b$ -Wert ist der negativé dekadische Logarithmus der Basizitätskonstante.

Das Vernetzungsmittel (Komponente B) ist ein Harz mit endständigen, veresterten Carboxylgruppen, die im neutralen, wäßrigen Medium weitgehend stabil sind, jedoch im basischen Medium des abgeschiedenen Films bei Temperaturen über etwa 140°C mit einem oder mehreren hydroxylgruppenhaltigen Aminopolyurethanen (Komponente A) reagieren. Es sollen im wesentlichen alle endständigen Carboxylgruppen mit Alkoholen verestert sein, die unter den Einbrennbedingungen flüchtig sind. Um ein Wandern der Komponente B zur Anode zu vermeiden, ist darauf zu achten, daß die Komponente B eine Säurezahl unter 20, bevorzugt unter 10, besonders bevorzugt unter 3 enthält. Das Vernetzungsmittel hat ein mittleres Molekulargewicht ($\bar{M}n$) von etwa 350 bis 5000, speziell 500 bis 3000. Die Reaktivität der Ester wird durch die Verwendung primärer Monoalkohole wie Methanol oder Ethanol und durch die Erhöhung der elektrophilen Aktivität der Carboxylgruppe durch geeigneten chemischen Aufbau gesteigert. Je niedrigermolekular Alkohole sind, die bei der Umesterung abgespalten werden desto niedriger sind die Spaltverluste. Es können in der Literatur beschriebene verschiedene Vernetzungsmittel dieser Art verwendet werden (vgl. die Literaturstellen, die in der Einleitung der Beschreibung für die Umamidierungs- oder Umesterungsverfahren genannt wurden.).

Ein solches Vernetzungsmittel kann z.B. durch Umesterung von Dicarbonsäurealkylestern mit Polyalkoholen hergestellt werden. Als besonders reaktiv haben sich Harze folgender allgemeiner Formel erwiesen:

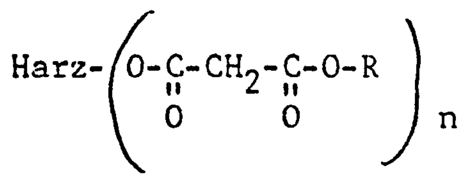

wobei n ein Wert zwischen 2 und 8, und R einen geradkettigen oder verzweigten Alkylrest mit 1 bis 8 C-Atomen darstellt, bevorzugt Methanol und Ethanol. Im einfachsten Fall ist dieses Vernetzungsmittel ein Reaktionsprodukt aus Trimethylolpropan und Malonsäuredimethylester, wie es in der EP-A-082 291 beschrieben ist.

Andere Vernetzungsmittel sind z.B. carboxylgruppenhaltige Polyester, deren Carboxylgruppen durch gegebenenfalls substituierte 1,2-Glykole unter Bildung von β-Hydroxy-verbindungen blockiert sind:

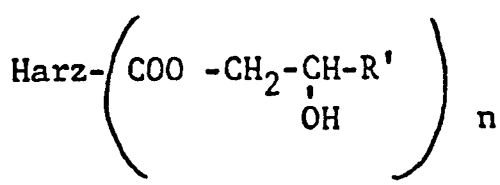

Die eingesetzten 1,2-Glykole sind zweckmäßig durch gesättigte oder ungestättigte Alkyl-, Ether-, Ester- oder Amidgruppen substituiert, d.h. R' steht für

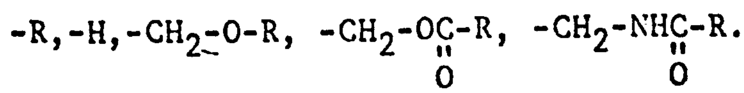

Diese Vernetzungsmittel sind in der EP-A-012 463 beschrieben, z.B. als Reaktionsprodukt von Trimellithsäureanhydrid mit Cardura E (eingetragenes Warenzeichen), dem Glycidylester der Versaticsäure.

Ein weiteres zur Umesterung befähigtes Vernetzungsmittel kann durch Michael-Addition von Acetessigsäurealkylester oder Malonsäuredialkylester an Harze mit aktivierten ungesättigten Doppelbindungen erhalten werden:

$$\text{Harz-}\left(\text{-O-}\underset{\substack{\|\\ O}}{C}\text{-CH}_2\text{-CH}_2\text{-CH}\Big\langle\begin{matrix}R''\\ \\ COOR\end{matrix}\right)_m$$

wobei R" für -COOR oder -CO-R steht und m ein Wert zwischen 1 und 8 ist. Diese Harze werden im einfachsten Fall aus Butandiol-diacrylat und Acetessigester oder aus dem Toluylendiisocyanathydroxyalkylacrylat-Addukt und Malonsäuredialkylester, wie in der DE-A-33 15 469 beschrieben, hergestellt. Die Michael-Addition kann stöchiometrisch durchgeführt werden oder unter Einsatz von überschüssigen Doppelbindungen.

Das Mischungsverhältnis der Komponenten A) und B) kann im Überzugsmittel in weiten Grenzen schwanken. Es liegt bevorzugt zwischen 80 zu 20 und 60 zu 40 und wird empirisch aus den optimal erreichbaren anwendungstechnischen Eigenschaften bei der gegebenen Einbrenntemperatur bestimmt. Eine Kombination mehrerer Vernetzungssysteme kann in bestimmten Fällen von Vorteil sein. Schon wenige Prozent, z.B. 0.5 bis 5.0 Gew.%, der an zweiter Stelle beschriebenen Vernetzungskomponente kann die Krateranfälligkeit der anderen Vernetzungsmittel entscheidend verringern. Die Komponenten können kalt gemischt oder auch bei erhöhter Temperatur präkondensiert werden. Dabei reagieren die Komponenten A) und B) in gewissem Umfang miteinander, ohne daß das Gemisch seine Hitzehärtbarkeit und die Eigenschaft, durch Protonieren mit Säuren wasserlöslich gemacht werden zu können, verliert.

Als übliche Umesterungskatalysatoren (Komponente C) werden zweckmäßig 0.1 bis 10 Gew.%, bevorzugt 2 bis 6 Gew.% (bezogen auf die Komponenten A) und B)) Metalloxide, Metallsalze oder Metallkomplexe von ein- oder mehrwertigen Metallen verwendet. Sie werden im allgemeinen nach Salzbildung mit 2-Ethylhexansäure oder Naphthensäure in aliphatischen und aromatischen Kohlenwasserstoffen gelöst. Diese Lösungen werden in das Elektrophoresebad einemulgiert. Eine andere Möglichkeit besteht in der Komplexbildung der Metalle mit Acetylacetonat, Dicyclopentadien oder 8-Oxy-hydrochinolin. Beispiele für geeignete Katalysatoren sind Antimontrioxid, Cobaltnaphthenat, Bleioctoat, Eisen-acetylacetonat, Reaktionsprodukt aus Zinkoxid + 8-Oxyhydrochinolin, Thallium-dicyclopentadien oder Triethanolamin-titanat. Bevorzugt werden Bleioctoat und das Zink-Oxyhydrochinolat. Die Metallkatalysatoren können auch in fein verteilter Form als Pigmente wie Bleisilikat eindispergiert werden. Wasserlösliche Metallsalze sind ebenfalls als Umesterungskatalysatoren geeignet, wenn das Metall als Verbindung oder Komplex in fein verteilter Form mit dem Lack abgeschieden wird. Bevorzugt sind Katalysatoren, die im ET-Bad unlöslich sind und sich nach der elektrophoretischen Abscheidung im abgeschiedenen Film beim Einbrennen gleichmäßig verteilen.

Durch Protonieren mit Säuren wird das kationische Basisharz in an sich bekannter Weise wasserverdünnbar gemacht. Beispiele für Säuren sind Salzsäuren, Ameisensäure, Essigsäure, Milchsäure, Zitronensäure, Malonsäure, Acrylsäure, Propionsäure, Aminoessigsäure, Phosphorsäure oder Alkylphosphorsäure. Monobasische organische Carbonsäuren werden bevorzugt. Es muß mindestens so viel Säure zugegeben werden, daß eine Lösung des kationischen Basisharzes erfolgt. Ein Überschuß an Säure d.h. ein Neutralisationgrad über 100 %, ist zweckmäßig zu vermeiden. Der MEQ-Wert (Milliäquivalente Säure pro 100 g Festharz) liegt im allgemeinen zwischen 20 und 80.

Das Überzugsmittel kann zusätzlich übliche lacktechnische Zusatzstoffe wie Antikratermittel, Verlaufmittel, Antischaummittel usw. enthalten. Naturgemäß sind solche Zusatzstoffe auszuwählen, die mit Wasser bei saurem bis neutralen pH-Wert keine störenden Reaktionen eingehen, keine störenden Fremdionen einschleppen und bei längerem Stehen nicht in nichtaufrührbarer Form ausfallen, d.h. auch nach längerem Stehen muß sich das Überzugsmittel durch Rühren in eine brauchbare Dispersion überführen lassen.

Das Überzugsmittel kann zum Senken der Viskosität, zum Steuern der Abscheidespannung und zum Verbessern der Haftung und des Verlaufs bis zu ungefähr 20 Gew.% organische Lösemittel enthalten. Es wird ein möglichst niedriger Gehalt an organischen Lösemitteln angestrebt, besonders unter 15 Gew.%, ganz besonders unter 10 Gew.%. Als Lösemittel dienen Alkohole, Glykolether, Ketoalkohole, gegebenenfalls unter Zusatz von aliphatischen und aromatischen Kohlenwasserstoffen verschiedener Kettenlänge. Bei der Auswahl muß berücksichtigt werden, daß die Komponente (B) nicht wasserlöslich ist und Anteile von wasserunlöslichen Lösemitteln gegebenenfalls den Dispergiervorgang erleichtern und stabilisieren können. Mit steigendem Lösemittelgehalt verschlechtert sich der Umgriff, und es können Überbeschichtungen auftreten; mit sinkendem Lösemittelgehalt verringert sich die abgeschiedene Schichtdicke. Die für die Herstellung der Komponente (A) notwendigen aprotischen Lösemittel können gegebenenfalls nach der Herstellung des Produktes gegen andere Lösemittel durch Abdestillieren ausgetauscht werden.

Der Feststoffgehalt des Überzugsmittels gemäß der Erfindung beträgt nach Verdünnen mit Wasser zweckmäßig 5 bis 30 Gew.%, vorzugsweise 10 bis 20 Gew.%. Der pH-Wert des Lackes liegt im allgemeinen zwischen 5.0 und 7.0, vorzugsweise zwischen 5.5 und 6.5. Liegt der pH-Wert zu niedrig, so ist mit einem Angriff der Säure auf das Eisen von Becken und Rohrleitungen zu rechnen. Die elektrophoretische Abscheidung erfolgt zweckmäßig frühestens 24 Stunden nach Herstellung des Bades. Während dieser Zeit wird zweckmäßig

kontinuierlich gerührt, um eine gleichmäßige Verteilung zu erhalten. Als Anode werden elektrisch leitfähige, nicht korrodierende Elektroden, z.B. aus nichtrostendem Stahl oder Graphit verwendet. Der kathodisch zu beschichtende Gegenstand und die Anode werden, wie für die elektrophoretische Abscheidung bekannt, in ein wäßriges Bad eingetaucht. Es können alle metallisch leitenden Werkstücke beschichtet werden, z.B. Kupfer, Aluminium, Zinn, Zink, Eisen und Legierungen dieser Metalle. Während der Abscheidung wird das Bad bei Temperaturen von zweckmäßig etwa 15 bis 35°C gehalten. Festkörper, Abscheidungstemperatur und -zeit, sowie Spannung werden so gewählt, daß die gewünschte Schichtstärke nach Abspülen mit Wasser und Einbrennen bei Temperaturen von etwa 160 bis 200°C erhalten wird. Beim Anlegen eines elektrischen Stroms mit einer Spannung von zweckmäßig 50 bis 500 Volt zwischen metallisch leitendem Werkstück und einer Gegenelektrode wird das wasserverdünnbare Basisharz an der Kathode koaguliert. Es transportiert hierbei das wasserunlösliche Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben.

Gleichzeitig werden Wasser und die zur Neutralisation verwendete Säure im Bad angereichert. Zum Nachfüllen müssen daher konzentriertere Lacke verwendet werden, die diese Verschiebung durch Änderung der Mengenverhältnisse ausgleichen. Diese Korrektur kann auch durch geeignete apparative Einrichtungen, z.B. Elektrodialyseverfahren, erfolgen.

Das Verfahren zur Herstellung der Überzugsmittel wird bevorzugt in zwei Stufen durchgeführt. Erfindungsgemäß werden die Überzugsmittel, die durch Protonieren mit Säuren wasserverdünnbar gemacht werden können, durch Umsetzung von gegebenenfalls verkappten Polyisocyanaten mit tertiäre Stickstoffatome enthaltenden Verbindungen und mit hydroxylgruppenhaltigen Verbindungen in aprotischen Lösungsmitteln hergestellt, wobei man

1. gegebenenfalls verkappte Polyisocyanate mit solchen mindestens ein tertiäres Stickstoffatom enthaltenden Verbindungen, die eine oder mehrere der folgenden Gruppen enthalten:

a) mindestens 2 Hydroxylgruppen
b) mindestens 2 sekundäre Aminogruppen
c) mindestens eine primäre Aminogruppe
d) mindestens je eine Hydroxyl- und sekundäre Aminogruppe,

zu einem gegebenenfalls verkappte Isocyanatgruppen enthaltenden Vorprodukt umsetzt, und man

2. das erhaltene Reaktionsprodukt mit einer solchen Menge Polyhydroxylverbindungen umsetzt, daß alle noch vorhandenen gegebenenfalls blockierten Isocyanatgruppen mit Hydroxylgruppen umgesetzt werden, wobei die Menge der mindestens ein tertiäres Stickstoffatom enthaltenden Verbindungen so groß ist, daß das erhaltene Reaktions-Endprodukt eine Aminzahl von 35 bis 120 aufweist, und wobei ein solcher Überschuß an gegebenenfalls blockierten Isocyanatgruppen, bezogen auf die Gruppen gemäß a) bis d) eingesetzt wird, daß nach Reaktion mit Polyhydroxylverbindungen eine Hydroxylzahl von 50 bis 400 erhalten wird.

<u>Für die Beispiele verwendete Harze:</u>

<u>Aminopolyurethanharz A 1:</u>

In einem Vierliter-Planschliffkolben mit Rührwerk, Thermometer und Rückflußkühler werden unter getrocknetem Inertgas 468 g wasserfreies Ethylacetat und 840 g Trimethylhexan-diisocyanat (4 Mol) eingefüllt und auf 40°C erwärmt. Innerhalb von zwei Stunden wird ein Gemisch aus 59.5 g N-Methyl-diethanolamin (0.5 Mol) und 102 g Dimethylaminopropylamin (1 Mol) zugetropft, wobei die Temperatur durch Kühlen auf 40°C bis 42°C gehalten wird. 30 Minuten nach Zutropfende beträgt der NCO-Gehalt 16.8 %. Anschließend werden 402 g Trimethylolpropan (3 Mol) auf einmal zugegeben. Die exotherme Reaktion steigert trotz Kühlens die Temperatur bis auf 60°C. Bei dieser Temperatur wird solange gehalten, bis der NCO-Gehalt 0.45 % beträgt (= g NCO in 100 g Lösung).

Danach wurden 520 g Ethylenglykolmonoethylether zugegeben und bei 60°C unter Vakuum das niedriger siedende Ethylacetat möglichst vollständig abdestilliert.

Endwerte:

| | |
|---|---|
| Festkörpergehalt: | 76.8 Gew.% (30 Minuten bei 180°C einbrennen) |
| Viskosität: | 1.2 Pas (nach Verdünnen auf 50 Gew.% mit Ethylenglykolmonoethylether) |
| Aminzahl: | 59 mg KOH/g Festharz |
| Hydroxylzahl (berechnet): | ca. 120 mg KOH/g Festharz. |

<u>Aminopolyurethanharz A 2:</u>

Herstellungsverfahren wie A 1, aber unter Einsatz von folgenden Mengen

| | | |
|---|---|---|
| I. | 376.9 g | wasserfreies Ethylacetat |
| | 1248.2 g | Isophorondiisocyanat |
| II. | 95.6 g | Methyldiethanolamin |
| | 163.9 g | Dimethylaminopropylamin |
| | 259.5 g | Ethylacetat |
| | | NCO-Gehalt: 16.0% |

| | | |
|---|---|---|
| III. | 478.4 g | Ethylacetat |
| | 478.4 g | Trimethylolpropan |

Abdestillieren des Ethylacetats und Verdünnen mit 455g Ethylenglykolmonoethylether.

| | |
|---|---|
| Festkörper: | 73.9 Gew.% |
| Viskosität: | 1.3 Pas |
| Aminzahl: | 61 mg KOH/g |
| OH-Zahl (berechnet): | 76 |

Aminopolyurethanharz A 3:
603 g wasserfreies Ethylacetat, 603 g Trimethylolpropan, 133.5 g Dimethylaminoethanol und 178.5 g Methyldiethanolamin werden gelöst. Bei 40°C wird unter gutem Rühren und gleichzeitigem Kühlen in einem doppelwandigen Kolben eine Lösung von 522 g wasserfreiem Ethylacetat und 1044 g Toluylendiisocyanat in 3 Stunden zugetropft, wobei die Temperatur 50°C nicht überstieg. Zum Vervollständigen der Reaktion wird danach auf 60°C erwärmt und nach Erreichen eines NCO-Gehaltes von 0 % mit 490 g Ethylenglykolmonoethylether verdünnt. Das Ethylacetat wird unter Vakuum bei 60°C möglichst vollständig abdestilliert, und es wird mit weiteren 500 g Ethylenglykolmonoethylether verdünnt.

| | |
|---|---|
| Festkörper | :57.7 Gew.% |
| Viskosität: | 12 Pas |
| Aminzahl: | 90 mg KOH/g |
| OH-Zahl (berechnet): | 145 |

Vernetzungsmittel B 1:
Gemäß EP-A-12 463, S. 17, Beispiel II(a), werden 781 g Trimellithsäureanhydrid bei 100°C in 1976 g Ethylglykolmonobutylether gelöst und mit 2236 g Cardura E 10 (eingetragenes Warenzeichen) sowie mit 7 g Benzyldimethylamin vermischt. Die Mischung wird auf 120°C unter Rühren erwärmt und gehalten, bis die Säurezahl unter 1.1 mg KOH/g gesunken ist.
Der Polyester hat die Kennzahlen:

| | |
|---|---|
| Festkörpergehalt: | 70.7 Gew.%, (60 Minuten 125°C) |
| Säurezahl: | 0.7 mg KOH/g Festharz |
| Epoxid-Äquivalentgewicht: | > 10 000. |

Vernetzungsmittel B 2: (nach DE-A-33 15 469, Härter I,3)
Ein Gemisch von 108 g Hydroxyethylacrylat, 81.8 g eines Gemisches von 2.4- und 2.6-Toluylendiisocyanat, 3 Tropfen Triethylamin und 21 g Diethylenglykoldimethylether wird 5 Stunden auf 60°C erhitzt. Der Isocyanatgehalt beträgt dann weniger als 0.2 %. Darauf werden 1 g Kalilauge (30 %ig in Methanöl) und 128 g Malonsäurediethylester zugegeben und das Gemisch in zweiter Stufe 6 Stunden auf 120°C erhitzt. Der Anteil der Doppelbindungen beträgt dann weniger als 0.2 %. Das Reaktionsgemisch wird darauf mit Ethylenglykolmonoethylether bis zu einem Festkörpergehalt von 90 Gew.% verdünnt. Man erhält eine mittel bis stark gelb gefärbte hochviskose klare Flüssigkeit.
Vernetzungsmittel B 3 (aus EP-A-0 082 291, Seite 15, Komponente B 5)
480 g Malonsäurediethylester und 134 g Trimethylolpropan werden auf 130°C erwärmt. Unter Kontrolle des Brechungsindex werden mit langsamen Temperaturanstieg bis 165°C 135 g Ethanol als Destillat abgetrennt. Anschließend werden unter steigendem Vakuum bei 160°C weitere flüchtige Komponenten abdestilliert, bis der Feststoffgehalt der Reaktionsmasse (Rückstand nach 30 Min bei 120°C) 95 Gew.% beträgt.

**Beispiel 1**

212 g des Aminopolyurethanharzes A 1 wurden mit 75 g Vernetzungsmittel B 2 und 5 g Vernetzungsmittel B 1, 5.8 g Bleioctoat (72 %ig) und 8.25 g Ameisensäure (85 %ig) gemischt und auf 2 Liter vollentsalztem Wasser langsam unter Rühren verdünnt.

| | |
|---|---|
| Festkörpergehalt: | ca. 12 Gew.% (15 Minuten 185°C) |
| pH-Wert: | 5.8 |
| Badleitfähigkeit: | 2300 $\mu Scm^{-1}$ |
| MEQ-Wert: | 50 |

Bei 25°C Badtemperatur wurde der Film 2 Minuten lang bei 170 Volt auf einem zinkphosphatierten Eisenblech (Bonder 132) elektrophoretisch abgeschieden. Nach 25 Minuten langem Einbrennen bei 180°C

(Objekttemperatur) entstand ein harter, glatter, 16 µm dicker Trockenfilm, der gegenüber Einwirkung von Methylethylketon unempfindlich war und nicht vergilbte.

**Beispiel 2**

312.5 g des Aminopolyurethanharzes A 1 werden mit 70 g Vernetzungsmittel B 3 und 5 g Vernetzungsmittel B 1, 5.8 g Bleioctoat (72 %ig) und 8.25g Ameisensäure (85 %ig) gemischt und auf 2 Liter mit vollentsalztem Wasser langsam unter Rühren verdünnt.

| | |
|---|---|
| Festkörpergehalt: | ca. 15 Gew.% |
| pH-Wert: | 5.8 |
| Badleitfähigkeit: | 2350 $\mu Scm^{-1}$ |
| MEQ-Wert: | etwa 50 |

Bei etwa 30°C Badtemperatur wurde der Lack 2 Minuten lang bei 180 Volt auf einem zinkphosphatierten Eisenblech elektrophoretisch abgeschieden. Nach Abspülen und 25 Minuten langem Einbrennen bei 180°C (Objekttemperatur) entsteht ein harter 17 bis 18 µm dicker Trockenfilm, der gegenüber Methylethylketon unempfindlich ist und nicht vergilbt.

**Beispiel 3**

243.6 g des Aminopolyurethanharzes A 2 werden mit 84.9 g Vernetzungsmittel B 1, 7.75 g Bleioctoat (72 %ig) und 11.7 g Essigsäure gemischt und auf 2 Liter mit vollentsalztem Wasser langsam unter Rühren verdünnt.

| | |
|---|---|
| Festkörpergehalt: | 11.2 Gew.% |
| pH-Wert: | 6.0 |
| Badleitfähigkeit: | 1830/$\mu Scm^{-1}$ |
| MEQ-Wert: | etwa 60 |

Das phosphatierte Blech wird an der Kathode 2 Minuten lang bei 230 Volt und einer Badtemperatur von etwa 30°C beschichtet. Anschließend wird abgespült und die koagulierte Schicht zu einem harten, gegen Lösemittel beständigen Film eingebrannt (20 Min. 175°C).

**Beispiel 4**

312 g Aminopolyurethanharz A 3 werden mit 75 g Vernetzungsmittel B 1, 7.75 g Bleioctoat (72 %ig) und 20 g Milchsäure (80 %ig) gemischt und auf 2 Liter vollentsalztem Wasser langsam unter Rühren verdünnt.

| | |
|---|---|
| Festkörpergehalt: | 11.7 Gew.% |
| pH-Wert: | 5.6 |
| Badleitfähigkeit: | 1470 $\mu Scm^{-1}$ |
| MEQ-Wert: | etwa 55 |

Das phosphatierte Blech wird an der Kathode 3 Minuten lang bei 215 Volt und einer Badtemperatur von etwa 30°C beschichtet. Nach Abspülen und Einbrennen bei 25 Minuten 170°C entsteht ein harter, gegen Lösemittel beständiger Film.

**Patentansprüche**

1. Kathodisch abscheidbares wäßriges, Epoxidhartz-freies Elektrotauchlack-Überzugsmittel, das ein Kunstharz-Bindemittel mit tertiären Aminogruppen und Hydroxylgruppen enthält, welches durch Protonieren mit Säuren wasserlöslich gemacht werden kann, und das Kunstharz-Vernetzungsmittel sowie gegebenenfalls Pigmente, Füllstoffe, Korrosionsinhibitoren, Lackhilfsmittel, Katalysatoren und in einer Menge von bis zu 20 Gew.%, bezogen auf das Gesamtgewicht des Überzugsmittels, organische Lösemittel enthält, dadurch gekennzeichnet, daß es enthält:
A) 50 bis 99 Gew.%, bezogen auf die Gesamtmenge von A) und B), eines Harnstoff- und Urethangruppen in der Kette de Moleküls enthaltenden Kunstharz-Bindemittels mit tertiären Aminogruppen und Hydroxylgruppen,

das
(a) eine Aminzahl von 35 bis 120 aufweist,
(b) eine Hydroxylzahl von 50 bis 400 aufweist,
(c) im wesentlichen keine primären, sekundären und quaternären Aminogruppen enthält,
(d) im wesentlichen keine freien Isocyanatgruppen enthält, und
(e) im wesentlichen keine blockierten Isocyanatgruppen enthält, die bei Einbrenntemperaturen bis zu 200°C mit in Reaktionskomponenten vorhandenen Hydroxylgruppen reagieren,

B) 1 bis 50 Gew.%, bezogen auf die Gesamtmenge von A) und B),im wesentlichen nicht-saure Kunstharze mit mindestens zwei endständigen veresterten Carboxylgruppen, die unter üblichen Lackeinbrennbedingungen mit der Komponente A) unter Vernetzung reagieren, und

C) Umesterungskatalysatoren für die thermische Umesterung von A) mit B) bei Temperaturen über 140°C.

2. Überzugsmittel nach Anspruch 1, dadurch gekennzeichnet, daß in der Komponente A) das Verhältnis der darin umgesetzten NCO-Gruppen zu den in den damit umgesetzten Verbindungen vorhandenen Hydroxylgruppen 1:1 bis 1:4, bevorzugt 1:1,2 bis 1:2 beträgt.

3. Überzugsmittel nach Anspruch 1 oder 2, dadurch gekennzeichnet, daß die Moleküle der Komponente A) im Durchschnitt mindestens eine tertiäre Aminogruppe enthalten.

4. Überzugsmittel nach einem der Ansprüche 1 bis 3, dadurch gekennzeichnet, daß die Kunstharze der Komponente B) die folgende allgemeine Formel aufweisen:

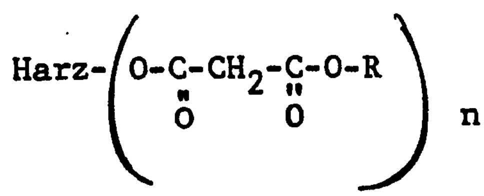

wobei n einen Wert zwischen 2 und 8 hat, und R einen geradkettigen oder verzweigten Alkylrest mit 1 bis 8 C-Atomen darstellt;

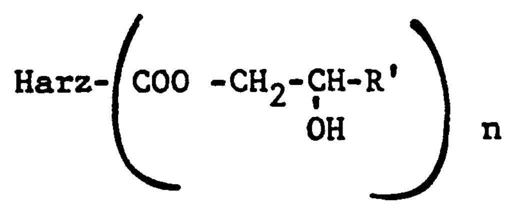

wobei R' für -R, -H, $-CH_2-O-R$, 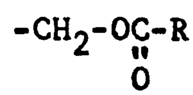

oder

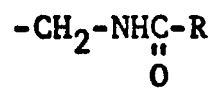

steht und n R wie oben definiert sind;

oder

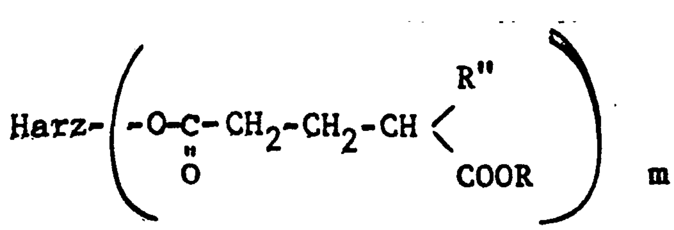

wobei R" für -COOR oder -CO-R steht, m ein Wert zwischen 1 und 8 ist und R wie oben definiert ist.

5. Verfahren zur Herstellung der Überzugsmittel nach einem der Ansprüche 1 bis 4, welche durch Protonisieren mit Säuren wasserverdünnbar gemacht werden können, durch Umsetzung von gegebenenfalls verkappten Polyisocyanaten mit tertiäre Stickstoffatome enthaltenden Verbindungen und mit hydroxylgruppenhaltigen Verbindungen in aprotischen Lösungsmitteln, dadurch gekennzeichnet, daß man

1) gegebenenfalls verkappte Polyisocyanate mit solchen mindestens ein tertiäres Stickstoffatom enthaltenden Verbindungen, die eine oder mehrere der folgenden Gruppen enthalten:

a) mindestens 2 Hydroxylgruppen

b) mindestens 2 sekundäre Aminogruppen

c) mindestens eine primäre Aminogruppe

d) mindestens je eine Hydroxyl- und sekundäre Aminogruppe,

zu einem gegebenenfalls verkappte Isocyanatgruppen enthaltenden Vorprodukt umsetzt, und man

2) das erhaltene Reaktionsprodukt mit einer solchen Menge Polyhydroxylverbindungen umsetzt, daß alle noch vorhandenen gegebenenfalls blockierten Isocyanatgruppen mit Hydroxylgruppen umgesetztwerden, wobei die Menge der mindestens ein tertiäres Stickstoffatom enthaltenden Verbindung so groß ist, daß das erhaltene Reaktions-Endprodukt eine Aminzahl von 35 bis 120 aufweist, und wobei ein solcher Überschuß an gegebenenfalls blockierten Isocyanatgruppen, bezogen auf die Gruppen gemäß a) bis d) eingesetzt wird, daß nach Reaktion mit Polyhydroxylverbindungen eine Hydroxylzahl von 50 bis 400 erhalten wird.

## Claims

1. A cathodically depositable, aqueous electrodeposition lacquer coating composition free from epoxy resin which contains a synthetic resin binder containing tertiary amino groups and hydroxyl groups, which may be solubilized in water by protonation with acids, and which contains synthetic resin crosslinking agents and, optionally, pigments, fillers, corrosion inhibitors, lacquer auxiliaries, catalysts and - in a quantity of up to 20% by weight, based on the total weight of the coating composition - organic solvents, characterized in that it contains

A) from 50 to 99% by weight, based on the total quantity of A) and B), of a synthetic resin binder which contains tertiary amino groups and hydroxyl groups and, in the chain of the molecule, urea and urethane groups and which

(a) has an amine number of from 35 to 120,

(b) has a hydroxyl number of from 50 to 400,

(c) contains substantially no primary, secondary or quaternary amino groups,

(d) contains substantially no free isocyanate groups and

(e) contains substantially no blocked isocyanate groups which react with hydroxyl groups present in reaction components at baking temperatures of up to 200°C,

B) from 1 to 50% by weight, based on the total quantity of A) and B), of substantially non-acidic synthetic resins containing at least two terminal esterified carboxyl groups which are capable of reacting with component A) with crosslinking under standard lacquer baking conditions and

C) transesterification catalysts for the thermal transesterification of A) with B) at temperatures above 140°C.

2. A coating composition as claimed in Claim 1, characterized in that, in component A), the ratio of the NCO groups reacted therein to the hydroxyl groups in the compounds reacted therewith is from 1:1 to 1:4 and preferably from 1:1.2 to 1:2.

3. A coating composition as claimed in Claim 1 or 2, characterized in that the molecules of component A) contain on average at least one tertiary amino group.

4. A coating composition as claimed in any of Claims 1 to 3, characterized in that the synthetic resins of component B) correspond to the following general formula:

$$\text{resin-}(\text{O-}\underset{\substack{\| \\ \text{O}}}{\text{C}}\text{-CH}_2\text{-}\underset{\substack{\| \\ \text{O}}}{\text{C}}\text{-O-R})_n$$

in which n has a value of from 2 to 8 and R is a linear or branched $C_1$ -$C_8$ alkyl radical;

$$\text{resin-}(COO-CH_2-\underset{OH}{CH}-R')_n$$

where R' represents

$$-R,\ -H,\ -CH_2-O-R,\ -CH_2-O\underset{O}{\overset{}{C}}-R$$

or

$$-CH_2-NH\underset{O}{C}-R$$

and n and R are as defined above; or

$$\text{resin-}(-O-\underset{O}{C}-CH_2-CH_2-CH\genfrac{}{}{0pt}{}{R''}{COOR})_m$$

where R" represents -COOR or -CO-R, m has a value of from 1 to 8 and R is as defined above.

5. A process for the production of the coating composition claimed in any of Claims 1 to 4, which may be made dilutable with water by protonation with acids, by reaction of optionally masked polyisocyanates with compounds containing tertiary nitrogen atoms and with compounds containing hydroxyl groups in aprotic solvents, characterized in that

1) optionally masked polyisocyanates are reacted with compounds containing at least one tertiary nitrogen atom and one or more of the following groups:

a) at least 2 hydroxyl groups

b) at least 2 secondary amino groups

c) at least one primary amino group

d) at least one hydroxyl and one secondary amino group, to form an intermediate product optionally containing masked isocyanate groups and

2) the reaction product obtained is reacted with polyhydroxyl compounds in such a quantity that all optionally blocked isocyanate groups still present are reacted with hydroxyl groups, the quantity of the compound containing at least one tertiary nitrogen atom being so large that the end reaction product obtained has an amine number of from 35 to 120 and optionally blocked isocyanate groups being used in such an excess, based on the groups according to a) to d), that a hydroxyl number of from 50 to 400 is obtained after reaction with polyhydroxyl compounds.

**Revendications**

1. Composition de revêtement aqueuse, dépourvue de résine époxyde, électrodéposable à la cathode, qui contient un liant de résine synthétique avec des groupes amino tertiaires et des groupes hydroxyle, que l'on peut rendre soluble l'eau par protonisation avec des acides, et l'agent réticulant de résine synthétique, ainsi qu'éventuellement des pigments, produits de remplissage, inhibiteurs de corrosion, adjuvants de laquage, catalyseurs, et en une quantité allant jusqu'à 20% en poids, par rapport au poids total de la composition de revêtement, des solvants organiques, caractérisée en ce qu'elle contient

A) de 50 à 99%, par rapport au poids total de A) et de B), d'un liant de résine synthétique contenant dans la chaîne de la molécule des groupes urée et uréthane, avec des groupes amino tertiaires et groupes hydroxyle,

qui

(a) présente un indice d'amine de 35 à 120,

(b) un indice d'hydroxyle de 50 à 400,

(c) ne contient essentiellement pas de groupes amino primaires, secondaires et quaternaires,

(d) pour l'essentiel ne contient pas de groupes isocyanate libres, et

(e) pour l'essentiel ne contient pas de groupes isocyanate bloqués, qui réagissent aux températures de cuisson jusqu'à 200° C avec les groupes hydroxyle présents dans les composants de la réaction,

B) de 1 à 50% en poids, par rapport à la quantité totale de A) et B), de résines synthétiques essentiellement non acides avec au moins deux groupes carboxyle estérifiés en position finale qui réagissent dans les conditions habituelles de cuisson des peintures avec le composant A) avec réticulation, et

C) des catalyseurs de trans-estérification pour la trans-estérification thermique de A) avec B) à des températures supérieures à 140° C.

2. Composition de revêtement selon la revendication 1, caractérisée en ce que dans le composant A) le rapport des groupes NCO qui réagissent aux groupes hydroxyle présents dans les composés ainsi mis à réagir s'élève à 1:1 à 1:4, de préférence à 1:1,2 à 1:2.

3. Composition de revêtement selon la revendication 1 ou 2, caractérisée en ce que les molécules du composant A) contiennent en moyenne au moins un groupe amino tertiaire.

4. Composition de revêtement selon l'une des revendications 1 à 3, caractérisée en ce que les résines synthétiques du composant B) présentent la formule générale ci-dessous:

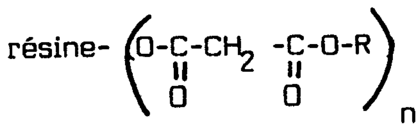

où n représente une valeur comprise entre 2 et 8, et R un radical alcoyle à chaîne droite ou ramifiée en C1 à C8;

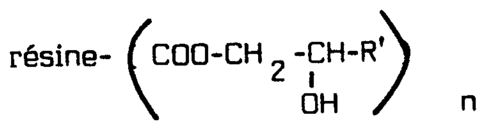

R' représente 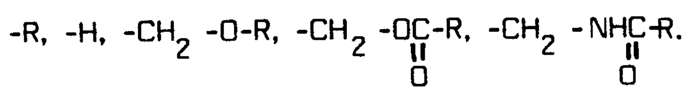

où

et n et R sont tels que définis ci-dessus; ou

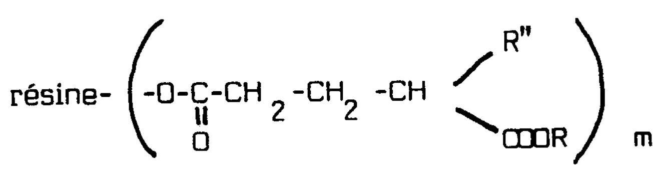

où R" représente -COOR ou -CO-R, m est une valeur comprise entre 1 et 8,

et R est tels que défini ci-dessus.

5. Procédé de préparation des compositions de revêtement selon l'une des revendications 1 à 4, que l'on peut rendre diluables dans l'eau par protonisation avec des acides, par réaction de polyisocyanates éventuellement masqués avec des composés contenant des atomes d'azote tertiaires et avec des composés contenant des groupes hydroxyle dans des solvants aprotiques, caractérisé en ce que

1) on fait réagir des polyisocyanates éventuellement masqués avec des composés contenant au moins un atome d'azote tertiaire, qui contiennent un ou plusieurs des groupes suivants:

a) au moins 2 groupes hydroxyle

b) au moins 2 groupes amino secondaires

c) au moins un groupe amino primaire

d) au moins chacun un groupe hydroxyle et un groupe amino secondaire, pour donner un produit intermédiaire contenant des groupes isocyanate éventuellement masqués et

2) on fait réagir le produit réactionnel obtenu avec une quantité de composés polyhydroxyle telle que tous les groupes isocyanate éventuellement bloqués encore présents réagissent avec des groupes hydroxyle, lla

quantité de composés contenant au moins un atome d'azote tertiaire étant si grande que le produit réactionnel final obtenu présente un indice d'amine de 35 à 120, et l'on emploie un tel excès de groupes isocyanate éventuellement bloqués par rapport aux groupes selon a) à d) qu'après réaction avec les composés polyhydroxyle on obtient un indice d'hydroxyle de 50 à 400.